(19) Europäisches Patentamt
European Patent Office
Office européen des brevets

(11) EP 2 541 104 A2

(12) **EUROPEAN PATENT APPLICATION**

(43) Date of publication:
**02.01.2013 Bulletin 2013/01**

(51) Int Cl.:
***F16J 15/02*** ***(2006.01)***

(21) Application number: **12173590.6**

(22) Date of filing: **26.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.06.2011 US 201161501409 P**

(71) Applicant: **Nitto Denko Corporation**
**Osaka 567-8680 (JP)**

(72) Inventors:
- **Hirose, Tetsuya**
**Ibaraki-shi, Osaka 567-8680 (JP)**
- **Kabutoya, Ryuuichi**
**Ibaraki-shi, Osaka 567-8680 (JP)**
- **Inokuchi, Shinji**
**Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(54) **Gasket**

(57) The present invention provides a gasket comprising an adhesive sheet and a substrate sheet laminated on one surface of the adhesive sheet, which shows a distortion recovery rate according to the following compression distortion recovery test (I) of not less than 40%: Compression distortion recovery test (I): A 10 mm flat square sample is heated to 80°C, under which conditions a load is applied to compress the sample in the thickness direction such that the thickness thereof becomes 75% of the total thickness of the sample before loading, the load is lifted, the total thickness of the sample is measured 3 hr after unloading, and a distortion recovery rate is calculated according to the following formula:
distortion recovery rate (%)=(total sample thickness 3 hr after unloading - (total sample thickness before compression x 0.75))/(total sample thickness before compression x 0.25) x 100.

F I G. 1

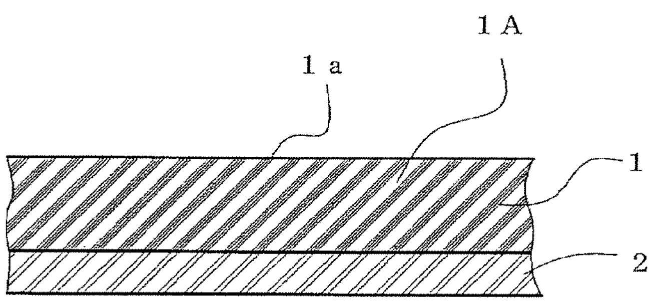


EP 2 541 104 A2

## Description

TECHNICAL FIELD OF THE INVENTION

The present invention relates to a gasket having superior sealing property (particularly against liquid such as water and the like).

BACKGROUND OF THE INVENTION

Conventionally, to prevent seepage of liquid or gas between two opposing faces in various machines and apparatuses or other structures, a gasket is set between the two opposing faces.

For example, an antenna to aid communication between aircrafts and distant places is set on the outer surface of the body wall (outer board) of the aircrafts. Many of such antennas have a plate-like fixing board having an electric connector protruding from one surface thereof. The surface of the fixing board having the protruding electric connector is superposed on the outer face of the outer board, the connector is inserted into the inside of an aircraft from the hole formed on the outer board of the aircraft, and connected to an appropriate electric circuit in the aircraft. In this case, the fixing board of the antenna is generally installed removably with a bold on the outer board of the aircraft, where a gasket is set between the outer face of the outer board and the inner face of the antenna fixing board to seal the antenna fixing board.

To be specific, a bold hole is formed at the corresponding positions of the antenna fixing board and the outer board of an aircraft, a gasket having a through-hole formed at a position corresponding to the bold hole in the antenna fixing board and the outer board of the aircraft is placed between them, a bold is inserted from the outside of the antenna fixing board into the through-hole of the antenna fixing board, the gasket and the outer board of the aircraft, and a blind nut is set on the inner face of the outer board of the aircraft, whereby the antenna is fixed. In so doing, the gasket is compressed by the deformation of the fixing board due to bolding, which in turn provides a seal of the bold and the bold pore, as well as the outer board of the aircraft and the fixing board. Consequently, penetration of moisture into the aircraft can be prevented.

As a gasket used for sealing such an antenna fixing member on the outer board of an aircraft, for example, US2004/0070156A1 proposes a gasket material wherein an adhesive layer of a flexible polyurethane gel is formed on both the front and the back of a carrier sheet (substrate sheet). This publication describes that a gasket having an adhesive layer of a polyurethane gel maintains superior sealing property, since polyurethane gel is superior in the flexibility, elasticity, compressibility, flexibility and the like, and nonreactive with the constituent materials (specifically aluminum etc.) of the outer board of aircrafts and antenna fixing board, and water (including brine).

There are many structures comprising two members with each surface facing the other surface (that is, forming a matching face of the two opposing faces), which are fixed not only at the fixing part of function articles on the above-mentioned outer board of an aircraft but also inside the aircraft. Such gasket to be applied between two mating faces inside an aircraft is strongly requested to show superior sealability against not only humidity but also liquid such as water and the like.

SUMMARY OF THE INVENTION

The present invention has been made in view of the above-mentioned situation and aims to provide a gasket having superior sealing property, particularly superior sealing property against liquid such as water and the like.

The present inventors have conducted intensive studies in an attempt to solve the aforementioned problems and found that, in a gasket mainly comprised of an adhesive sheet, recovery property of the gasket from compression distortion is closely related to sealing property of the gasket (particularly against liquid such as water and the like (water stop performance)). Further studies based on such finding have resulted in the completion of the present invention.

Accordingly, the present invention provides the following.

[1] A gasket comprising an adhesive sheet having an adhesive layer, and a substrate sheet laminated on one surface of the adhesive sheet, which shows a distortion recovery rate according to the following compression distortion recovery test (I) of not less than 40%:

Compression distortion recovery test (I): A 10 mm flat square sample is heated to 80°C, under which conditions a load is applied to compress the sample in the thickness direction such that the thickness thereof becomes 75% of the total thickness of the sample before loading, the load is lifted,
the total thickness of the sample is measured 3 hr after unloading, and a distortion recovery rate is calculated according to the following formula:

distortion recovery rate (%)=(total sample thickness 3 hr after unloading - (total sample thickness before compression x 0.75))/(total sample thickness before compression x 0.25) x 100.

[2] The gasket of the above-mentioned [1], wherein the adhesive sheet is a non-halogen flame retardant-containing adhesive sheet provided with an adhesive layer containing a non-halogen flame retardant.
[3] The gasket of the above-mentioned [1], wherein the adhesive sheet is a laminate of adhesive layer/core film/adhesive layer in this order.
[4] The gasket of the above-mentioned [1], wherein the adhesive sheet consists of a single layer of an adhesive layer.
[5] The gasket of the above-mentioned [1], wherein the adhesive layer is a polyoxyalkylene adhesive layer or an acrylic adhesive layer.
[6] The gasket of the above-mentioned [1], wherein the adhesive layer is a polyoxyalkylene adhesive layer which is a cured product layer of a composition comprising the following components A-C:

A: a polyoxyalkylene polymer having at least one alkenyl group in one molecule
B: a compound containing two or more hydrosilyl groups on average in one molecule
C: a hydrosilylation catalyst.

[7] The gasket of the above-mentioned [2], wherein the adhesive layer is a polyoxyalkylene adhesive layer which is a cured product layer of a composition containing the following components A - D:

A: a polyoxyalkylene polymer having at least one alkenyl group in one molecule
B: a compound containing two or more hydrosilyl groups on average in one molecule
C: a hydrosilylation catalyst
D: a non-halogen flame retardant.

[8] The gasket of the above-mentioned [1], wherein the substrate sheet is a fluorine resin sheet.
[9] The gasket of the above-mentioned [2], wherein the substrate sheet is a fluorine resin sheet.
[10] A method of tightly sealing two opposing faces, comprising placing the gasket of the above-mentioned [1] between the two opposing faces.
[11] A method of tightly sealing two opposing faces, comprising placing the gasket of the above-mentioned [2] between the two opposing faces.

According to the present invention, a gasket having superior sealing property particularly against liquid such as water and the like can be realized.

## BRIEF DESCRIPTION OF THE DRAWINGS

Fig. 1 is a schematic sectional view of the gasket of an embodiment of the present invention.
Fig. 2 is a schematic sectional view of the gasket of Fig. 1 placed between two adherends, with tightly sealed two opposing faces.
Fig. 3 is a schematic sectional view of the gasket of the other embodiment of the present invention.
Fig. 4(A) - Fig. 4(C) are schematic sectional views showing the production steps of a gasket having a core film.
Fig. 5(A) is a schematic view of the gasket of the present invention in a roll state and Fig. 5(B) is a partly enlarged sectional view of the gasket shown in Fig. 5(A).
Fig. 6(A) - Fig. 6(C) are schematic sectional views showing the production steps of a measurement sample to be used for a water stop test.
Fig. 7 is an explanation figure of the water stop test.

In the Figures, 1 is an adhesive sheet, 1A is an adhesive layer, 1B is a core film, 2 is a substrate sheet, 10 is a gasket, 10A, 10B are surfaces of the gasket to be closely adhered to adherends, and 20, 21 are adherends.

## DETAILED DESCRIPTION OF THE INVENTION

The present invention is explained in the following by referring to preferable embodiments.
Fig. 1 is a schematic sectional view of one embodiment of the gasket 10 of the present invention, and Fig. 2 is a schematic sectional view of the gasket 10 of Fig. 1 placed between two adherends, with tightly sealed two opposing faces.

The gasket of the present invention mainly comprises, as shown in the gasket 10 of the above embodiment, an adhesive sheet 1 and a substrate sheet 2 laminated on one surface of the adhesive sheet 1, and is placed between opposing faces of two adherends 20, 21 during use (i.e., between opposing faces of the two surfaces) (Fig. 2).

One of both surfaces 10A, 10B of the gasket to be closely adhered to adherends 20, 21 (i.e., at least one surface of gasket) is a pressure-sensitive adhesive face 1a of the adhesive sheet 1. Since the face 1a of the adhesive sheet 1 adheres to the adherend 20, gasket 10 is arranged between the opposing faces of the two adherends 20, 21 without misalignment.

The substrate sheet 2 confers self-supportability to the adhesive sheet 1 to improve installation workability of the gasket 10, as well as suppresses undesired deformation of the gasket 10 to improve adhesiveness of the gasket 10 to the adherends 20, 21.

In the gasket of the present invention, the adhesive sheet 1 preferably contains a non-halogen flame retardant. As a result, the gasket can exhibit high flame retardancy in addition to superior sealing property, without generating toxic halogen gas during combustion.

In the gasket 10 of the above-mentioned one embodiment, the adhesive sheet 1 consists of a single adhesive layer 1A; however, in the present invention, the adhesive sheet 1 may also be a laminate adhesive sheet of adhesive layer/core film/adhesive layer in this order. Fig. 3 is an adhesive sheet in the form of a laminate in the order of adhesive layer 1A/core film 1B/adhesive layer 1A.

The gasket of the present invention is generally compression-immobilized between opposing faces of two adherends (i.e., two mating surfaces), by placing the gasket between opposing faces of two adherends, bolting the two adherends and the like.

The gasket of the present invention shows a distortion recovery rate of 40% or above, by the following compression distortion recovery test (I). Compression distortion recovery test (I): A 10 mm flat square sample is heated to 80°C, under which conditions a load is applied to compress the sample in the thickness direction such that the thickness thereof becomes 75% of the total thickness of the sample before loading, the load is lifted, the total thickness of the sample is measured 3 hr after unloading, and a distortion recovery rate is calculated according to the following formula:

distortion recovery rate (%)=(total sample thickness 3 hr after unloading - (total sample thickness before compression x 0.75))/(total sample thickness before compression x 0.25) x 100.

The above-mentioned distortion recovery rate is an index of the sustainability of impact resilience against compression of the whole gasket, including a substrate sheet, in the thickness direction. The higher the value is, the longer a high contact pressure of the gasket with an adherend is sustained. Since the gasket of the present invention has a distortion recovery rate of not less than 40%, it affords more superior sealing property (particularly, more superior sealing property to liquid such as water and the like). Such distortion recovery rate is preferably 40 - 100%, more preferably 50 - 100%.

In the gasket of the present invention, an adhesive layer is formed from a pressure sensitive adhesive. When an adhesive layer contains a non-halogen flame retardant, it can be formed from an adhesive composition containing a blend of a pressure sensitive adhesive and a non-halogen flame retardant. While the pressure sensitive adhesive is not particularly limited, those capable of forming a pressure-sensitive adhesive layer superior in the elasticity, compressibility and adhesion are preferable. For example, acrylic, silicone or polyoxyalkylene adhesives can be mentioned. Among these, polyoxyalkylene adhesive is superior in the elasticity, compressibility and adhesion, and can form a pressure-sensitive adhesive layer superior in the removability. Use of the polyoxyalkylene adhesive has advantage, since a gasket can be easily separated from an adherend during maintenance.

(Acrylic adhesive)

When an acrylic adhesive is used for an adhesive of adhesive layer 1A, an acrylic adhesive containing, as a base polymer, an acrylic polymer with alkyl(meth)acrylate as a main monomer unit, is preferable. The "(meth)acrylate" here means the same as "acrylate and/or methacrylate".

The average carbon number of the alkyl group of the alkyl(meth)acrylate is preferably about 1 to 18. Specific examples of such alkyl(meth)acrylate include methyl(meth)acrylate, ethyl(meth)acrylate, n-butyl(meth)acrylate, 2-ethylhexyl(meth)acrylate, isooctyl(meth)acrylate, isononyl(meth)acrylate, lauryl(meth)acrylate and the like. One or more kinds of these are used in combination. Among these, alkyl(meth)acrylate wherein the carbon number of the alkyl group is 1

to 12 is preferable.

One or more kinds of various monomers may be introduced into an acrylic polymer by copolymerization to improve adhesiveness to an adherend and heat resistance of the pressure-sensitive adhesive sheet. Specific examples of such copolymerizable monomer include monomers containing a hydroxyl group such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth) acrylate, 10-hydroxydecyl (meth)acrylate, 12-hydroxylauryl (meth)acrylate, (4-hydroxymethylcyclohexyl)methyl (meth) acrylate and the like; monomers containing a carboxyl group such as (meth)acrylic acid, carboxyethyl(meth)acrylate, carboxypentyl(meth)acrylate, itaconic acid, maleic acid, fumaric acid, crotonic acid and the like; monomers containing an acid anhydride group such as maleic anhydride, itaconic anhydride and the like; caprolactone adduct of acrylic acid; monomers containing a sulfo group such as styrenesulfonic acid, allylsulfonic acid, 2-(meth)acrylamide-2-methylpropanesulfonic acid, (meth)acrylamidepropanesulfonic acid, sulfopropyl (meth)acrylate, (meth)acryloyloxynaphthalenesulfonic acid and the like; monomers containing a phosphate group such as acrylate 2-(phosphonooxy)ethyl etc., and the like. In addition, nitrogen containing vinyl monomers can be mentioned, for example, maleimide, N-cyclohexylmaleimide, N-phenylmaleimide; N-acryloylmorpholine; (N-substitution)amide monomers such as (meth)acrylamide, N,N-dimethyl (meth)acrylamide, N,N-diethyl(meth)acrylamide, N-hexyl(meth)acrylamide, N-methyl(meth)acrylamide, N-butyl(meth) acrylamide, N-butyl(meth)acrylamide, N-methylol(meth)acrylamide, N-methylolpropane(meth)acrylamide and the like; alkylaminoalkyl (meth)acrylate monomers such as aminoethyl (meth)acrylate, aminopropyl (meth)acrylate, N,N-dimethylaminoethyl (meth)acrylate, t-butylaminoethyl (meth)acrylate, 3-(3-pyridinyl)propyl(meth)acrylate and the like; alkoxyalkyl (meth)acrylate monomers such as methoxyethyl (meth)acrylate, ethoxyethyl (meth)acrylate and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide, N-acryloylmorpholine etc., and the like can be mentioned.

Furthermore, vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, N-vinylcaprolactam and the like; cyanoacrylate monomers such as acrylonitrile, methacrylonitrile and the like; epoxy group-containing acrylic monomers such as glycidyl (meth)acrylate and the like; glycol acrylate monomers such as polyethylene glycol (meth)acrylate, polypropylene glycol (meth)acrylate, methoxyethyleneglycol (meth)acrylate, methoxypolypropyleneglycol (meth)acrylate and the like; acrylate monomers such as tetrahydrofurfuryl (meth)acrylate, fluorine-containing (meth)acrylate, silicone (meth)acrylate, 2-methoxyethylacrylate etc., and the like can also be mentioned.

Among these, carboxyl group-containing monomers such as (meth)acrylic acid and the like are preferable and acrylic acid is particularly preferable in view of the adhesiveness of the pressure-sensitive adhesive sheet to an adherend, adhesion durability, weatherability and the like. In addition, a crosslinking structure is preferably introduced into an adhesive layer, and a crosslinking agent is generally contained in an acrylic adhesive in addition to the base polymer. Therefore, when an isocyanate crosslinking agent is used as the crosslinking agent, at least a hydroxyl group-containing monomer is preferably used as a copolymerizable monomer, since the reactivity with an isocyanate group is high.

The weight ratio of the copolymerizable monomer in the acrylic polymer is preferably about 0.1 - 10 wt%. In addition, while the average molecular weight of the acrylic polymer is not particularly limited, the weight average molecular weight is generally about 300,000 to 2,500,000.

Acrylic polymers are produced by various known methods and, for example, radical polymerization methods such as bulk polymerization method, solution polymerization method, suspension polymerization method and the like can be appropriately employed. As a radical polymerization initiator, various known azo based initiators and peroxide based initiators can be used. The reaction temperature is generally about 50 to 80°C, and the reaction time is 1 to 8 hr.

As the crosslinking agent (curing agent) to be contained in an acrylic adhesive, a known crosslinking agent such as isocyanate based crosslinking agents, epoxy based crosslinking agents, peroxide based crosslinking agents, metal chelate based crosslinking agents, oxazoline based crosslinking agents and the like can be appropriately used. One or more kinds of these crosslinking agents can be used in combination. The amount of the crosslinking agent to be used is preferably 0.5 - 5 parts by weight, more preferably 1 - 2 parts by weight, relative to 100 parts by weight of the acrylic polymer. When the amount of the crosslinking agent to be used is less than 0.5 part by weight, the gel fraction of the adhesive layer 1A may not be increased sufficiently. When it is more than 5 parts by weight, crosslinking may proceed too much to decrease adhesiveness of the adhesive layer 1A.

(Silicone adhesive)

When a silicone adhesive is used as an adhesive for the adhesive layer 1A, the silicone adhesive is not particularly limited, and peroxide crosslinked silicone adhesives (peroxide curable silicone adhesive) and addition reaction silicone adhesives, which are generally used, can be preferably used. These peroxide crosslinked silicone adhesives and addition reaction silicone adhesives may be commercially available products. Specific examples of the peroxide crosslinked silicone adhesive include KR-3006A/BT manufactured by Shin-Etsu Chemical Co., Ltd., SH 4280 PSA

manufactured by Toray Dow Corning Corporation Silicone and the like. Specific examples of the addition reaction silicone adhesive include X-40-3501 manufactured by Shin-Etsu Chemical Co., Ltd., BY 24-712 manufactured by Toray Dow Corning Corporation Silicone, TSE32X manufactured by Momentive Performance Materials Inc and the like.

(Polyoxyalkylene adhesive)

When a polyoxyalkylene adhesive is used as an adhesive for the adhesive layer 1A, it is preferably a cured product of a composition containing the following components A - C:

A: a polyoxyalkylene polymer having at least one alkenyl group in each molecule
B: a compound containing two or more hydrosilyl groups on average in each molecule
C: a hydrosilylation catalyst.

The above-mentioned "polyoxyalkylene polymer having at least one alkenyl group in each molecule" for component A is an adhesive polymer to be the main constituent of the adhesive. It is not particularly limited, and various polymers can be used. However, one wherein the main chain of the polymer has a repeat unit represented by the formula (1) shown below is preferable:
$-R^1-O-$ formula (1):

wherein $R^1$ is an alkylene group.
$R^1$ is preferably a linear or branched alkylene group having 1 to 14, more preferably 2 to 4, carbon atoms.
As specific examples of the repeat unit represented by the general formula (1), $-CH_2O-$, $-CH_2CH_2O-$, $-CH_2CH(CH_3)O-$, $-CH_2CH(C_2H_5)O-$, $-CH_2C(CH_3)_2O-$, $-CH_2CH_2CH_2CH_2O-$ and the like can be included. The main chain skeleton of the polyoxyalkylene polymer may consist of only one kind of repeat unit, and may consist of two kinds or more of repeat units. particularly, from the aspects of availability and workability, a polymer having $-CH_2CH(CH_3)O-$ as a main repeat unit is preferable. In the main chain of the polymer, a repeat unit other than the oxyalkylene group may be contained. In this case, the total sum of oxyalkylene units in the polymer is preferably not less than 80% by weight, particularly preferably not less than 90% by weight.
Although the polymer of component A may be a linear polymer or a branched polymer, or a mixture thereof, it preferably contains a linear polymer in a proportion of not less than 50% by weight, so that the adhesive layer will show good adhesiveness to the surface of various materials.
The molecular weight of the polymer of component A is preferably 500 to 50,000, more preferably 5,000 to 30,000, in terms of number-average molecular weight. When the number average molecular weight is less than 500, the obtained cured product tends to be too brittle, and when the number average molecular weight exceeds 50,000, the viscosity becomes unfavorably too high to markedly decrease workability. The number average molecular weight here means the value obtained by Gel Permeation Chromatography (GPC) method.
The polymer of component A preferably has a narrow molecular weight distribution wherein the ratio of weight-average molecular weight and number-average molecular weight (Mw/Mn) is not more than 1.6; a polymer having an Mw/Mn of not more than 1.6 produces a decreased viscosity of the composition and offers improved workability. Hence, the Mw/Mn is more preferably not more than 1.5, still more preferably not more than 1.4. As mentioned herein, Mw/Mn refers to a value obtained by the gel permeation chromatography (GPC) method.
Here, the molecular weight (based on polystyrene) is measured by the GPC method using GPC apparatus (HLC-8120GPC) manufactured by Tosoh Corporation, where the measurement conditions are as follows.
sample concentration: 0.2 wt% (THF solution)
sample injection volume: 10 μl
eluent: THF
flow rate: 0.6 ml/min
measurement temperature: 40°C
column: sample column TSKgel GMH-H(S)
detector: differential refractometer
With regard to the polymer of component A (polyoxyalkylene polymer having at least one alkenyl group in each molecule), the alkenyl group is not subject to limitation, but an alkenyl group represented by the formula (2) shown below is suitable:
$H_2C=C(R^2)-$ formula (2):

wherein $R^2$ is hydrogen or a methyl group.

The mode of binding of the alkenyl group to the polyoxyalkylene polymer is not subject to limitation; for example, alkenyl group direct bond, ether bond, ester bond, carbonate bond, urethane bond, urea bond and the like can be included.

As specific examples of the polymer of component A, a polymer represented by the general formula (3): $\{H_2C=C(R^{3a})-R^{4a}-O\}a_1R^{5a}$

wherein $R^{3a}$ is hydrogen or a methyl group; $R^{4a}$ is a divalent hydrocarbon group having 1 to 20 carbon atoms, optionally having one or more ether groups, $R^{5a}$ is a polyoxyalkylene polymer residue; $a_1$ is a positive integer, can be included. As $R^{4a}$ in the formula, specifically, $-CH_2-$, - $CH_2CH_2-$, $-CH_2CH_2CH_2-$, $-CH_2CH(CH_3)CH_2-$, $-CH_2CH_2CH_2CH_2-$, $-CH_2CH_2OCH_2CH_2-$, or $-CH_2CH_2OCH_2CH_2CH_2-$ and the like can be included; for the ease of synthesis, $-CH_2-$ is preferable.

A polymer having an ester bond, represented by the formula (4): $\{H_2C=C(R^{3b})-R^{4b}-OCO\}a_2R^{5b}$ wherein $R^{3b}$, $R^{4b}$, $R^{5b}$ and $a_2$ have the same definitions as those of $R^{3a}$, $R^{4a}$, $R^{5a}$, and $a_1$, respectively, can also be included.

A polymer represented by the formula (5): $\{H_2C=C(R^{3c})\}a_3R^{5c}$ wherein $R^{3c}$, $R^{5c}$ and $a_3$ have the same definitions as those of $R^{3a}$, $R^{sa}$, and $a_1$, respectively, can also be included.

Furthermore, a polymer having a carbonate bond, represented by the formula (6): $\{H_2C=C(R^{3d})-R^{4d}-O(CO)O\}a_4R^{5d}$ wherein $R^{3d}$, $R^{4a}$, $R^{5d}$ and $a_4$ have the same definitions as those of $R^{3a}$, $R^{4a}$, $R^{5a}$ and $a_1$, respectively, can also be included.

It is preferable that at least 1, preferably 1 to 5, more preferably 1.5 to 3, alkenyl groups be present in each molecule of the polymer of component A. If the number of alkenyl groups contained in each molecule of the polymer of component A is less than 1, the curing is insufficient; if the number exceeds 5, the mesh structure becomes so dense that the polymer sometimes fails to exhibit a good adherence. The polymer of component A can be synthesized according to the method described in JP-A-2003-292926, and any commercially available product can be used.

Particularly preferable embodiment of the polymer of component A includes terminal allylation polyoxypropylene wherein an allyl group is bonded to both terminals of polypropylene glycol.

Any component B compound containing two or more hydrosilyl groups on average in each molecule can be used without limitation, as long as it is a curing agent that cures component A (adhesive polymer), and has a hydrosilyl group (a group having an Si-H bond). From the viewpoint of easy obtainment of raw materials and compatibility with the component A, an organohydrogen polysiloxane modified with an organic constituent is particularly preferable. The aforementioned polyorganohydrogen siloxane modified with an organic constituent more preferably has an average of 2 to 8 hydrosilyl groups in each molecule. Specific examples of the structure of the polyorganohydrogen siloxane include linear or cyclic ones represented by, for example:

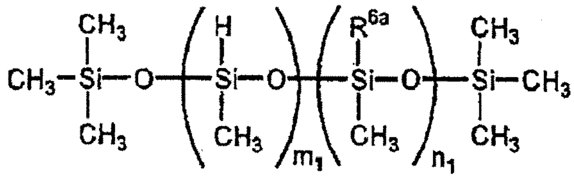

wherein $2 \leq m_1+n_1 \leq 50$, $2 \leq m_1$, and $0 \leq n_1$, $R^{6a}$ is a hydrocarbon group having 2 to 20 carbon atoms in the main chain thereof, optionally comprising one or more phenyl groups,

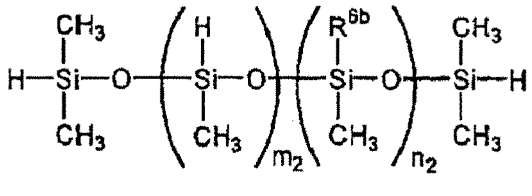

wherein $0 \leq m_2+n_2 \leq 50$, $0 \leq m_2$, and $0 \leq n_2$, $R^{6b}$ is a hydrocarbon group having 2 to 20 carbon atoms in the main chain thereof, optionally comprising one or more phenyl groups,

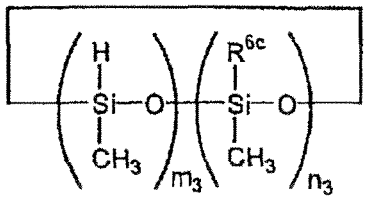

wherein $3 \le m_3+n_3 \le 20$, $2 \le m_3 \le 19$, and $0 \le n_3 < 18$, $R^{6c}$ is a hydrocarbon group having 2 to 20 carbon atoms in the main chain thereof, optionally having one or more phenyl groups, and the like, and ones having two or more of these units, represented by the following:

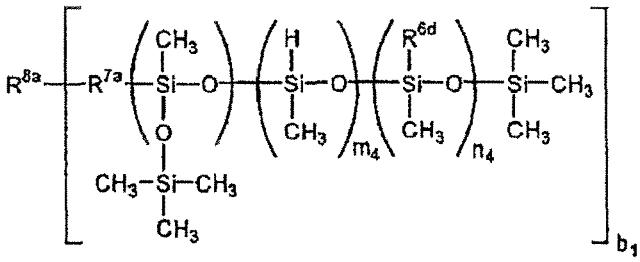

wherein $1 \le m_4+n_4 \le 50$, $1 \le m_4$, and $0 \le n_4$, $R^{6d}$ is a hydrocarbon group having 2 to 20 carbon atoms in the main chain thereof, optionally having one or more phenyl groups, $2 \le b_1$, $R^{8a}$ is a divalent to tetravalent organic group, and $R^{7a}$ is a divalent organic group, but $R^{7a}$ may be absent depending on the structure of $R^{8a}$,

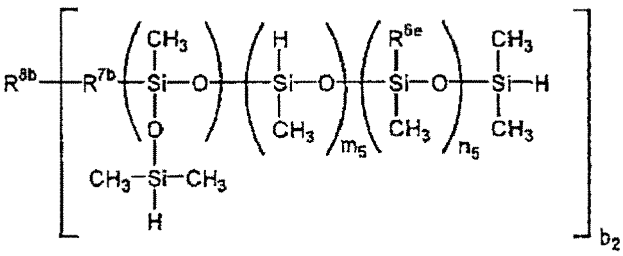

wherein $0 \le m_5+n_5 \le 50$, $0 \le m_5$, and $0 \le n_5$, $R_{6e}$ is a hydrocarbon group having 2 to 20 carbon atoms in the main chain thereof, optionally having one or more phenyl groups, $2 \le b_2$, $R^{8b}$ is a divalent to tetravalent organic group, and $R^{7b}$ is a divalent organic group, however, $R^{7b}$ may be absent depending on the structure of $R^{8b}$, or

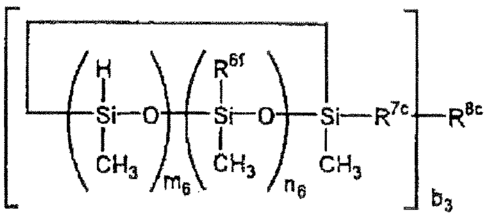

wherein $3 \le m_6+n_6 \le 50$, $1 \le m_6$, and $0 \le n_6$, $R^{6f}$ is a hydrocarbon group having 2 to 20 carbon atoms in the main chain thereof, optionally comprising one or more phenyl groups, $2 \le b_3$, $R^{8c}$ is a divalent to tetravalent organic group, and $R^{7c}$ is a divalent organic group, however, $R^{7c}$ may be absent depending on the structure of $R^{8c}$, and the like.

The "compound containing two or more hydrosilyl groups on average in each molecule" for component B preferably has good compatibility with the component A and the component C, or good dispersion stability in the system. Particularly, if the viscosity of the entire system is low, use of an ingredient whose compatibility with any of the above-described ingredients is low as the component B sometimes causes phase separation and a curing failure.

As a specific example of the component B having relatively good compatibility with the component A and the component C, or relatively good dispersion stability, the following can be included.

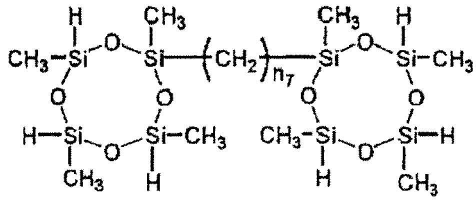

wherein $n_7$ is an integer of not less than 4 and not more than 10,

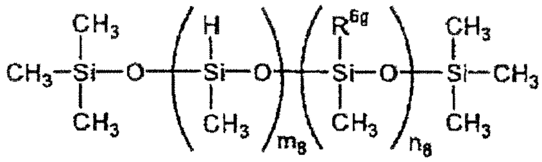

wherein $2 \leq m_8 \leq 10$ and $0 \leq n_8 \leq 5$, $R^{6g}$ is a hydrocarbon group having eight or more carbon atoms.

As specific preferable examples of the component B, polymethylhydrogen siloxane can be included; for assuring compatibility with the component A and adjusting the SiH content, a compound modified with α-olefin, styrene, α-methylstyrene, allylalkyl ether, allylalkyl ester, allylphenyl ether, allylphenyl ester or the like can be included; as an example, the following structure can be included.

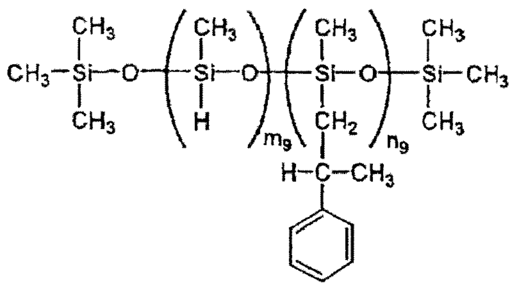

wherein $2 \leq m_9 \leq 20$ and $1 \leq n_9 \leq 20$.

The component B can be synthesized by a commonly known method, and any commercially available product can be used.

In the present invention, the component C "hydrosilylation catalyst" is not subject to limitation; an optionally chosen one can be used. As specific examples, chloroplatinic acid; platinum; solid platinum carried by a carrier such as alumina, silica, or carbon black; a platinum-vinylsiloxane complex {for example, $Pt_n(ViMe_2SiOSiMe_2Vi)_m$, $Pt[(MeViSiO)_4]_m$ and the like}; a platinum-phosphine complex {for example, $Pt(PPh_3)_4$, $Pt(PBu_3)_4$ and the like}; a platinum-phosphite complex {for example, $Pt[P(OPh)_3]_4$, $Pt[P(OBu)_3]_4$ and the like}; $Pt(acac)_2$; the platinum-hydrocarbon conjugates described in US Patent 3159601 and 3159662 of Ashby et al.; the platinum alcoholate catalyst described in US Patent 3220972 of Lamoreaux et al. and the like can be included. (In these formulas, Me represents a methyl group, Bu represents a butyl group, Vi represents a vinyl group, Ph represents a phenyl group, acac represents an acetylacetonate, and each of n and m represents an integer.)

As examples of catalysts other than platinum compounds, $RhCl(PPh_3)_3$, $RhCl_3$, $Rh/Al_2O_3$, $RuCl_3$, $IrCl_3$, $FeCl_3$, $AlCl_3$, $PdCl_2.2H_2O$, $NiCl_2$, $TiCl_4$ and the like can be included.

These catalysts may be used alone, and may be used in combination of 2 kinds or more. With regard to catalyst activity, chloroplatinic acid, a platinum-phosphine complex, a platinum-vinylsiloxane complex, $Pt(acac)_2$ and the like are preferable.

Although the amount of the component C formulated is not subject to limitation, from the viewpoint of assurance

of composition potlife and transparency of the cured product (adhesive layer), the amount is generally not more than $1 \times 10^{-1}$ mol, preferably not more than $5.3 \times 10^{-2}$ mol, relative to 1 mol of alkenyl groups in the component A; particularly, from the viewpoint of transparency of the cured product (adhesive layer), the amount is more preferably not more than $3.5 \times 10^{-2}$ mol, particularly preferably not more than $1.4 \times 10^{-3}$ mol. When the amount exceeds $1 \times 10^{-1}$ mol relative to 1 mol of alkenyl groups in the component A, the finally obtained cured product (adhesive layer) is likely to undergo yellowing and the transparency of the cured product (adhesive layer) tends to be damaged. When the amount of the component C formulated is too low, the composition curing speed is slow, and the curing quality tends to be unstable; therefore, the amount is preferably not less than $8.9 \times 10^{-5}$ mol, more preferably not less than $1.8 \times 10^{-4}$ mol.

The composition comprising the above-described components A to C is cured by heating. That is, the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby curing is completed. The cured product is characterized by the ability to exhibit its tacky characteristic (function to adhere to other object) even without addition, or with addition of a small amount, of an adhesiveness-imparting resin. It has low activity, and does not react upon contact with various substances such as water, metal, plastic material and the like.

In a composition containing components A-C, component A and component B are preferably added such that the hydrosilyl group of component B (compound B) has a functional group ratio of not less than one and less than 10, more preferably not less than 2 and less than 8, still more preferably not less than 3 and less than 6, relative to the alkenyl group of component A (compound A). A composition wherein the aforementioned functional group ratio is not less than 10 tends to have difficulty in sufficiently enhancing the gel fraction of adhesive layer 1A. When the functional group ratio is less than 1, crosslinking in a cured product becomes too loose, and the property may be difficult to maintain at a high temperature.

(Non-halogen flame retardant)

In the present invention, the non-halogen flame retardant that can be added to the adhesive layer 1A is not particularly limited, and known flame retardants free of halogen atom such as hydrated metal compound based flame retardants, inorganic compound based flame retardants, phosphorus flame retardant, silicone flame retardant, nitrogen compound based flame retardants, organic metal compound based flame retardants and the like can be used. Of these, phosphorus flame retardants are preferable since they can impart flame retardancy and are superior in the suppression of drip during combustion, compatibility to environmental regulation and the like.

Examples of the hydrated metal compound based flame retardant include aluminum hydroxide, magnesium hydroxide, calcium hydroxide and the like. Examples of the inorganic compound based flame retardant include antimony compound, zinc borate, zinc stannate, molybdenum compound, zinc oxide, zinc sulfide, zeolite, titanium oxide, nano filler (montmorillonite (MMT), nano hydrated metal compound, silica), carbon nanotube, calcium carbonate and the like.

Examples of the phosphorus flame retardant include phosphates, aromatic condensed phosphates, ammonium polyphosphates and the like. Specific examples of the phosphate include triphenyl phosphate, tricresyl phosphate (TCP), cresyl diphenyl phosphate (CDP), 2-ethylhexyldiphenyl phosphate, triethyl phosphate (TEP), tri-n-butyl phosphate, trixylenyl phosphate, xylenyl diphenyl phosphate (XDP) and the like. Specific examples of the aromatic condensed phosphate include resorcinol bisdiphenyl phosphate, bisphenol A bis(diphenyl phosphate), resorcinol bisdixylenyl phosphate and the like. Specific examples of the ammonium polyphosphate include ammonium polyphosphate (APP), melamine-modified ammonium polyphosphate and coated ammonium polyphosphate. Here, the coated ammonium polyphosphate is obtained by coating or microcapsulating ammonium polyphosphate with a resin to enhance water resistance. The phosphate, aromatic condensed phosphate and ammonium polyphosphate can be used concurrently. A combined use of phosphate and ammonium polyphosphate is preferable since flame retardancy in both the solid phase and gaseous phase can be achieved by a combination of a flame retardancy effect of a char layer formed by phosphate and a flame retardancy effect of noncombustible gas production by ammonium polyphosphate.

Examples of the silicone flame retardant include dimethylsilicone, amino-modified silicone, epoxy-modified silicone and the like.

Examples of the nitrogen compound based flame retardant include hindered amine compounds, melamine cyanurate, triazine compounds, guanidine compounds and the like.

Examples of the organic metal compound based flame retardant include copper ethylenediaminetetraacetate, calcium perfluorobutanesulfonate and the like.

One or more kinds of the non-halogen flame retardants can be used in a mixture. While the amount thereof to be used varies depending on the kind of the flame retardant, it is generally preferably not less than 10 parts by weight, more preferably not less than 30 parts by weight, particularly preferably not less than 50 parts by weight, relative to 100 parts by weight of the adhesive polymer in the adhesive, since the effects of flame retardancy, drip suppression by char

layer formation and the like can be efficiently achieved. It is preferably not more than 200 parts by weight, more preferably not more than 150 parts by weight, particularly preferably not more than 100 parts by weight, since more superior adhesive property, preservability and the like can be obtained.

(Tackifier resin)

In the present invention, the pressure-sensitive adhesive layer 1A can contain a tackifier resin to improve adhesion of a gasket to an adherend and flame retardancy. Examples of the tackifier resin include terpene tackifier resin, phenol tackifier resin, rosin based tackifier resin, petroleum tackifier resin and the like. One or more kinds of tackifier resin can be used.

Examples of the terpene tackifier resin include terpene resins such as α-pinene polymer, β-pinene polymer, dipentene polymer and the like, modified terpene resins (e.g., terpenephenol resin, styrene-modified terpene resin, aromatic-modified terpene resin, hydrogenated terpene resin etc.) obtained by modifying (phenol-modification, aromatic-modification, hydrogenated-modification, hydrocarbon-modification etc.) these terpene resins, and the like.

Examples of the phenol tackifier resin include condensates (e.g., alkylphenol resin, xyleneformaldehyde resin and the like) of various phenols (e.g., phenol, m-cresol, 3,5-xylenol, p-alkylphenol, resorcin etc.) and formaldehyde, resol obtained by addition reaction of the aforementioned phenol with, formaldehyde using an alkali catalyst, novolac obtained by condensation reaction of the aforementioned phenol with formaldehyde using an acid catalyst and the like.

Examples of the rosin based tackifier resin include unmodified rosin (natural rosin) such as gum rosin, wood rosin, tall oil rosin and the like, modified rosin (hydrogenated rosin, disproportionated rosin and polymerized rosin, and other chemically-modified rosin etc.) obtained by modifying the above unmodified rosins by hydrogenation, disproportionation, polymerization and the like, various rosin derivatives and the like. Examples of the aforementioned rosin derivative include rosin esters such as modified rosin ester compound obtained by esterifying modified rosin (rosin ester compound obtained by esterifying unmodified rosin with an alcohol, hydrogenated rosin, disproportionated rosin, polymerized rosin and the like) with an alcohol and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid modified rosin ester obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins (particularly, rosin esters) such as unmodified rosin, modified rosin, various rosin derivatives and the like; and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used.

Examples of the alcohol to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexahydric alcohols such as dipentaerythritol etc. and the like. These are used alone or in a combination of two or more kinds thereof.

Examples of the petroleum tackifier resin include known petroleum resins such as aromatic petroleum resin, aliphatic petroleum resin, alicyclic petroleum resin (aliphatic cyclic petroleum resin), aliphatic aromatic petroleum resin, aliphatic alicyclic petroleum resin, hydrogenated petroleum resin, coumarone resin, coumarone indene resin and the like. Specific examples of the aromatic petroleum resin include polymers using one or more kinds of vinyl group-containing aromatic hydrocarbon having 8 to 10 carbon atoms (styrene, o-vinyltoluene, m-vinyltoluene, p-vinyltoluene, α-methylstyrene, β-methylstyrene, indene, methylindene etc.) and the like. As the aromatic petroleum resin, an aromatic petroleum resin obtained from a fraction such as vinyltoluene, indene and the like (i.e., "C9 petroleum fraction") (namely, "C9 based petroleum resin") can be used preferably. Examples of the aliphatic petroleum resin include polymers obtained by using one or more kinds selected from dienes such as olefin having 4 or 5 carbon atoms (e.g., butene-1, isobutylene, pentene-1 etc.), butadiene, piperylene, 1,3-pentadiene, isoprene etc., and the like. Furthermore, as the aliphatic petroleum resin, an aliphatic petroleum resin obtained from a fraction such as butadiene, piperylene, isoprene and the like (i.e., "C4 petroleum fraction", "C5 petroleum fraction" etc.) (namely, "C4 based petroleum resin", "C5 based petroleum resin" etc.) can be used preferably. Examples of the alicyclic petroleum resin include an alicyclic hydrocarbon resin obtained by cyclization and dimerization of an aliphatic petroleum resin (i.e., "C4 based petroleum resin", "C5 based petroleum resin" etc.), followed by polymerization, a polymer of a cyclic diene compound (cyclopentadiene, dicyclopentadiene, ethylidenenorbornane, dipentene, ethylidenebicycloheptene, vinylcycloheptene, tetrahydroindene, vinylcyclohexene, limonene etc.) or a hydrogenated resin thereof, an alicyclic hydrocarbon resin obtained by hydrogenating the aromatic ring of the aforementioned aromatic hydrocarbon resin, the following aliphatic aromatic petroleum resin and the like. Examples of the aliphatic aromatic petroleum resin include a styrene-olefin copolymer and the like. In addition, as the

aliphatic aromatic petroleum resin, a so-called "C5/C9 copolymerization petroleum resin" and the like can be used.

The tackifier resin is preferably terpene tackifier resin and/or rosin based tackifier resin, particularly preferably rosin based tackifier resin, from the aspect of flame retardancy of gasket. The terpene tackifier resin and rosin based tackifier resin easily provide effect as flame retardant auxiliary agents. Using these, adhesion of a gasket to an adherend and flame retardancy of a gasket can be improved more remarkably. The terpene tackifier resin is particularly preferably a terpenephenol resin, the rosin based tackifier resin is particularly preferably rosin ester (i.e., esterified compound of unmodified rosin, hydrogenated rosin, disproportionated rosin or polymerized rosin), and the rosin ester is preferably trivalent or higher polyhydric alcohol ester, particularly preferably tetra to hexahydric polyhydric alcohol ester.

One or more kinds of the tackifier resins can be used in combination, and the amount thereof to be used is not particularly limited. However, it is preferably not less than 5 parts by weight, more preferably not less than 10 parts by weight, particularly preferably not less than 15 parts by weight, relative to 100 parts by weight of the adhesive, since it becomes a carbon source and sufficiently exhibits the effect of a phosphorus flame retardant as an auxiliary agent. From the aspects of maintenance of adhesive property, preservability, handling property, dispersibility and the like, it is preferably not more than 100 parts by weight, more preferably not more than 60 parts by weight, particularly preferably not more than 40 parts by weight.

In the present invention, the pressure sensitive adhesive layer 1A can contain, where necessary, various additives such as plasticizer, filler made of glass fiber, glass bead, metal powder or other inorganic powder etc., pigment, colorant, antioxidant, UV absorber and the like. In addition, a tackifier can be added as appropriate to further enhance adhesiveness to substrate sheet 2. Examples of the adhesion promoter include various silane coupling agents, epoxy resin and the like. Of these, silane coupling agents having a functional group such as an epoxy group, a methacryloyl group, a vinyl group and the like are preferable since they are effective for expression of adhesiveness. In addition, a catalyst for reacting a silyl group and an epoxy group can be added concurrently with a silane coupling agent and an epoxy resin. In the case of containing a polyoxyalkylene adhesive (adhesive consisting of a cured product of a composition containing the above-mentioned components A - C), such catalyst should be selected in consideration of the influence on the curing reaction (hydrosilylation reaction) to produce the adhesive.

When a polyoxyalkylene adhesive (made from a cured product of a composition containing the above-mentioned components A - C) is used, it may contain a storage stability improving agent to improve the storage stability. As the storage stability improving agent, a compound commonly known as a storage stabilizer for the component B of the present invention can be used without limitation. For example, a compound comprising an aliphatic unsaturated bond, an organic phosphorus compound, an organic sulfur compound, a nitrogen-containing compound, a tin compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-butene-3-ol, 2-methyl-3-butene-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be included, but these are not to be construed as limitative.

As shown in the embodiment of Fig. 3, when the adhesive sheet 1 is constituted with an adhesive sheet in the form of a laminate in the order of adhesive layer 1A/core film 1B/adhesive layer 1A, the material of core film 1B is not particularly limited. Examples thereof include a plastic film made from one or more kinds selected from polyester (e.g., poly(ethylene terephthalate) (PET) and the like); nylon; polyvinyl chloride; polyvinylidene chloride; polyolefin (e.g., polyethylene, polypropylene, reactor TPO, ethylene-vinyl acetate copolymer and the like); fluororesin (e.g., polytetrafluoroethylene (PTFE), polychlorotrifluoroethylene (PCTFE), polyvinylidene fluoride (PVDF), polyvinyl fluoride (PVF), perfluoroalkoxy fluororesin (PFA), tetrafluoroethylene hexafluoropropylene copolymer (FEP), ethylene tetrafluoroethylene copolymer (ETFE), ethylene chlorotrifluoroethylene copolymer (ECTFE) and the like) and the like, a metal foil, a film obtained by laminating the aforementioned plastic film and a metal foil and the like, with preference given to a plastic film. The core film is preferably "nonporous" from the aspects of shape retention property, sealing property to liquid (water stop property) and the like of the gasket. Being "nonporous" means performed films, net cloth, woven fabric, nonwoven fabric, mesh and the like are excluded, and means a solid film.

While the thickness of the core film 1B varies depending on the material of the film, it is preferably 10 - 70 $\mu$m, more preferably 15 - 50 $\mu$m. When the thickness of the core film 1B is more than 70 $\mu$m, a roll tape obtained by winding the film tends to show poor appearance. When the thickness of the core film 2 is less than 10 $\mu$m, the core film tends to show defective adhesion in the production step.

(Substrate sheet)

As the substrate sheet 2 to be laminated on one surface of the adhesive sheet 1 is preferably a sheet having not only the heat resistance required for a gasket but also superior water repellency and/or high resistance to moisture permeation. Generally, plastic sheets made from fluororesins such as polytetrafluoroethylene (PTFE), polychlorotrifluoroethylene (PCTFE), polyvinylidene fluoride (PVDF), polyvinyl fluoride (PVF), perfluoroalkoxy fluororesin (PFA), tetrafluoroethylene hexafluoropropylene copolymer (FEP), ethylene tetrafluoroethylene copolymer (ETFE), ethylene chlorotrifluoroethylene copolymer (ECTFE) and the like), a silicone resin and the like are used. Among those, a fluororesin sheet is preferable, which is particularly preferably a polytetrafluoroethylene (PTFE) sheet.

The thickness of the substrate film 2 is preferably about 10 - 500 μm, more preferably 10 - 200 μm, particularly preferably 90 - 180 μm, to achieve good adhesion of a gasket to an adherend and improved detach workability for maintenance.

In the gasket of the present invention, while the thickness of the adhesive sheet 1 is not particularly limited, when the adhesive sheet 1 consists of a single layer of adhesive layer 1A, as shown in the gasket of the embodiment of Fig. 1, the thickness of the adhesive layer 1A is preferably 200 - 1400 μm, more preferably 400 - 1200 μm, from the aspects of sealing properties (level difference absorbability, step followability and the like).

As shown in the gasket of the embodiment of Fig. 3, when the adhesive sheet 1 is a laminate adhesive sheet in the order of adhesive layer 1A/core film 1B/adhesive layer 1A, the thickness of two adhesive layers 1A sandwiching the core film 1B may be the same or different, and is preferably the same. From the aspects of sealing properties (level difference absorbability, step followability and the like), the thickness of the adhesive layer 1A is preferably such that the total thickness of the two layers sandwiching the core film 1B is 200 - 1400 μm, more preferably 400 - 1200 μm.

Particularly, when the adhesive sheet 1 is in the form of a laminate in the order of adhesive layer 1A/core film 1B/adhesive layer 1A, a primer layer can be formed on the surface of the core film 1 (at least on one surface). The primer layer is not particularly limited as long as it can enhance the binding force between the core film 1B and the adhesive layer 1A. Examples thereof include polyester polyurethane; chlorinated hydrocarbon resin such as chlorinated polypropylene and the like; acrylic polymer or the like, with preference given to polyester polyurethane. While the polyester polyurethane is not particularly limited, it is, for example, obtained by urethane modification of polyester having two or more hydroxy groups with a polyisocyanate compound (bifunctional or more isocyanate compound). The thickness of the primer layer is preferably 0.1 - 10 μm, more preferably 0.5 - 5μm, to improve the anchor property between the adhesive layer and the core film.

While the total thickness of the gasket of the present invention thickness is not particularly limited, it is generally preferably 300 - 1800 μm.

In the gasket of the present invention, the production method of the adhesive sheet is not particularly limited, and a conventional production method of an adhesive sheet can be employed. When an acrylic adhesive sheet containing an acrylic adhesive as the adhesive is used, for example, a method wherein a photopolymerizable composition containing a monomer for main skeleton of a base polymer, a copolymerizable monomer, a radical polymerization initiator, a crosslinking agent and the like is mixed with a non-halogen flame retardant as necessary, which is applied to one surface of a substrate sheet to form a coated film with a given thickness, a release-treated surface of a release sheet is adhered thereon, and the resultant product is subjected to UV irradiation to allow a polymerization reaction to proceed can be employed. When the adhesive layer contains a tackifier resin and other additives, they can be mixed with the photopolymerizable composition together with a non-halogen flame retardant.

When a silicone adhesive sheet containing a silicone adhesive as the adhesive is used, for example, a method wherein the silicone adhesive is applied to one surface of a substrate sheet, a release-treated surface of a release sheet is adhered thereon, and the resultant product is subjected to predetermined drying by heating can be employed.

For the production of both an adhesive sheet using an acrylic adhesive and an adhesive sheet using a silicone adhesive, a conventional release agent such as silicone release agent, fluorine release agent and the like can be used as appropriate for a release treatment of a release sheet.

A polyoxyalkylene adhesive sheet containing a polyoxyalkylene adhesive as the adhesive is produced, for example, by the following method. First, the aforementioned Components A-C are charged in a stirring apparatus provided with a vacuum function together with a non-halogen flame retardant (Component D) and an organic solvent as necessary, and defoamed by stirring in a vacuum state (under vacuum) to give a defoamed mixture (composition). When an adhesive sheet contains a tackifier resin and other additives, a tackifier resin and other additives are added together with the above-mentioned components A-C and the like to prepare the mixture (composition). Then, the defoamed composition (mixture) containing Components A-C is applied to one surface of a substrate sheet to form a coated film with a given thickness, a release-treated surface of a release sheet is adhered thereon, and the resultant product is subjected to a predetermined heat treatment to the cure composition (mixture) containing Components A-C. The curing reaction is performed by the progress of a crosslinking structure by hydrosilylation of the alkenyl group in Component A (polyoxyalkylene polymer having at least one alkenyl group in 1 molecule) with a hydrosilyl group (group having Si-H bond) in Component B (compound having a hydrosilyl group) in the presence of a hydrosilylation catalyst (Component C).

The mixture can be applied to for example, a commonly known coating apparatus such as a gravure coater; a roll coater such as a kiss coater or a comma coater; a die coater such as a slot coater or a fountain coater; a squeeze coater, a curtain coater and the like. Regarding the heat treatment conditions in this case, it is preferable that the composition be heated at 50 to 200°C (preferably 100 to 160°C) for about 0.01 to 24 hours (preferably 0.05 to 4 hours).

As the above-described stirrer with vacuum function, a commonly known stirrer equipped with vacuum apparatus may be used; specifically, a planetary (revolution type/rotation type) stirring defoaming apparatus, a defoaming apparatus equipped with a disperser, and the like can be included. The degree of pressure reduction in performing vacuum defoaming is preferably not more than 10 kPa, more preferably not more than 3 kPa. Stirring time varies also depending on the choice of stirrer and the throughput of fluidized product, and is generally preferably about 0.5 to 2 hours. Due to the defoaming treatment, the resulting adhesive layer is substantially free of a void, and high transparency can be achieved.

Release agent include silicone type release treatment agent, fluoride type release treatment agent, long chain alkyl type release treatment agent etc. can be applied to the support surface. Of these, a silicone type release treatment agent is preferable. As the curing method, a curing method such as UV irradiation, electron beam irradiation and the like are preferably used. Furthermore, of the silicone type release treatment agents, a cation polymerizable UV curing silicone type release treatment agent is preferable. A cation polymerizable UV curing silicone type release treatment agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curing silicone type release treatment agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include $\gamma$-glycidyloxypropyl group, $\beta$-(3,4-epoxycyclohexyl)ethyl group, $\beta$-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd.

A release treatment agent can be applied, for example, using a general coating apparatus such as those used for roll coater method, reverse coater method, doctor blade method and the like. While the coating amount (solid content) of the release treatment agent is not particularly limited, it is generally about 0.05 - 6 $mg/cm^2$.

When a gasket having a core film is produced, the following method shown in Fig. 4 is preferable.
First, an adhesive layer 1A is formed on one surface of a substrate sheet 2, and a core film 1B is adhered to an adhesive layer 1A (Fig. 4(A)).

A release sheet 7 is prepared, and the adhesive layer 1A is formed on one surface of the release sheet 7 (Fig. 4(B)).

The adhesive layer 1A formed on one surface of the above-mentioned release sheet 7 is press adhered to one surface of the core film 1B (adhesive layer non-formed surface) (Fig. 4(C)). The press condition therefor is preferably about 1 - 5 $kgf/cm^2$.

As shown in Fig. 5(A) and Fig. 5(B), the gasket of the present invention before placing between two mating surfaces is preferably stored as a roll-like product (roll state gasket) 100. In this case, a substrate sheet 2 with the back face subjected to a peel treatment is used.

In the gasket of the present invention, a gasket is placed between opposing faces of two adherends (i.e., two mating surfaces) by generally interposing a gasket between two mating surfaces and the two adherends are bolted and the like.

The gasket of the present invention can be used for sealing of two opposing faces of machines, instruments and structures in various technical fields. For example, it can be used for mounting various instruments and equipments on the outer board (body) of airframes and vehicles of aircrafts, cars, electric trains and the like, for structures where two members are fixed with their surfaces opposing with each other (i.e., forming two opposing faces) in airframes and vehicles
of aircrafts, cars, electric trains and the like, and the like. Particularly, since the gasket has high flame retardancy and does not corrode metals, it is particularly advantageous as a material for aircrafts.

When the gasket of the present invention is produced using a pressure-sensitive adhesive sheet comprising a polyoxyalkylene adhesive, the adhesive force (release force) increases with time after adhesion of a pressure-sensitive adhesive face to an adherend. As a result, more superior sealing can be afforded. Moreover, since the adhesive force (release force) does not increase excessively even after long-term adhesion to the adherend, the gasket can be easily separated from the adherend for maintenance.

A pressure-sensitive adhesive sheet using a polyoxyalkylene adhesive shows a shear storage elastic modulus (G') at -30°C of not more than $6.0\times10^5$ (Pa), preferably not more than $5.5\times10^5$ (Pa). The shear storage elastic modulus (G') is known as an index of the hardness of viscoelastic body. Since a pressure-sensitive adhesive sheet using a polyoxyalkylene adhesive shows a shear storage elastic modulus (G') at -30°C of not more than $6.0\times10^5$ (Pa), and does

not become rigid at low temperatures, it is considered to maintain high flexibility even at a temperature below zero. In consideration of the time-temperature reduction rule, a highspeed deformation at a certain temperature is influenced by the property of a viscoelastic body at a lower temperature. Therefore, the discussion of an adhesive force at -30°C should take into consideration viscoelastic behavior at a lower temperature. The pressure-sensitive adhesive sheet using a polyoxyalkylene adhesive in the gasket of the present invention also shows a shear storage elastic modulus at -50°C of not more than $6.0\times10^5$. Therefore, the adhesion stability at a lower temperature is considered to be highly superior. The "shear storage modulus (G')" here is measured by the following method.

[Shear storage modulus (G')]

Plural samples are prepared by forming an adhesive layer on a release-treated surface of a release sheet, and the obtained adhesive layers are adhered to each other to give a laminate having a thickness of about 0.5 - 1 mm. The laminate is cut into a disc having a diameter of 7.9 mm and used as a sample for the measurement using the following apparatus and conditions.
measurement apparatus: ARES manufactured by Rheometric Scientific Inc.
measurement condition: measurement temperature -30°C and -50°C
measurement frequency 1Hz (6.28 rad/sec)

The present invention is explained in more detail in the following by referring to Examples and Comparative Examples. The property evaluation (test) of the gasket material in the Examples and Comparative Examples was performed according to the following methods.

1. Combustion test

Performed according to UL STANDARD "UL-94".
To be specific, 3 kinds of samples (length 5 inch xwidth 1 inch, thickness maximum, thickness minimum, and thickness medium) were prepared, and subjected to the test under the following conditions. Five samples each for thickness maximum, minimum and medium were prepared, and a total of 15 samples were subjected to the test.
test atmosphere: air
firing: 10 seconds
test procedure: after flame contact for 10 seconds, test flame was removed and the flaming time and glowing time were recorded. When the fire ceased within 30 seconds, flame contact was performed for 10 seconds.

(Evaluation criteria)

Evaluated on grades (5VA, 5VB, V-0, V-1, V-2, HB) according to UL STANDARD "UL-94". When HB or above, pass (○) was marked.

2. Halogen content

Measured according to JISK0127.
Detection of not less than 5 ppm of halogen such as Cl, Br and the like is failure (x), and detection amount of less than 5 ppm is pass (○).

3. Distortion recovery test (I)

Under a room temperature environment (temperature: 20±15°C, relative humidity: 65±20%RH), gasket was cut out into a 10 mm flat square sample. Using an electromagnetic force type micro-testing machine (micro servo) manufactured by Shimadzu Corporation, the sample was set on the pedestal, a load was applied in a compression mode while heating to 80°C to compress the sample in the thickness direction of the sample such that the thickness thereof becomes 75% of the total thickness of the sample before loading, the load is lifted, the total thickness of the sample is measured 3 hr after unloading, and a distortion recovery rate is calculated according to the following formula:

distortion recovery rate (%)=(total sample thickness 3 hr after unloading - (total sample thickness before compression x 0.75))/(total sample thickness before compression x 0.25) x 100.

4. Water stop test (Water stop performance after recovery)

A gasket was punched out into a sample S1 with a U-shaped flat plane (width 10 mm, height 148 mm, distance between both ends 54 mm) shown in Fig. 6(A). The sample S1 was, as shown in Fig. 6(B), sandwiched between two pieces of aluminum boards 12, 13 and compressed by 25% in the thickness direction. The boards were left standing in this state at 80°C for 3 hr, as shown in Fig. 6(C), recovered to 15% compression, and left standing at room temperature (temperature: 20±15°C) for 3 hr. Then, as shown in Fig. 7, water was supplied up to the height of 100 mm in the U-shaped sample S1 compression immobilized between the two aluminum boards, left standing in a room temperature environment for 3 hr, and the amount of water leakage from the inside of the U-shape was measured as the distance. That is, the height of the water surface after leaving for 3 hr was measured, and the amount of water leakage was calculated by the following formula as the distance.

Amount of water leakage (mm) = initial water surface height (100 (mm)) - water surface height (mm) after test

In the Figure, reference sign 15 is a bolt fixing two pieces of aluminum boards 12, 13, reference sign 14 is a cuboid spacer made of aluminum, and the distance between the two aluminum boards 12, 13 is adjusted by the thickness of the spacer 14.

Example 1

A thermosetting cold liquid resin (manufactured by Kaneka Corporation, trade name "ACX022") (100 parts by weight) made from terminal allylation polyoxypropylene wherein an allyl group is bonded to the both terminals of polypropylene glycol having an average molecular weight of about 28000 is mixed with rosin pentaerythritol (10 parts by weight), which is a tackifier resin, heated to 100°C and stirred for 30 min. After confirmation of transparency of the mixture, dissolution of the tackifier resin in the thermosetting cold liquid resin was confirmed. Thereto were added a curing catalyst (0.05 part by weight), which is made of a solution of platinum/1,3-divinyltetramethyldisiloxane complex in 2-propanol (complex concentration 3%, manufactured by N.E. CHEMCAT CORPORATION, product name "3% Pt-VTS-IPA solution"), a curing agent (7.65 parts by weight), which is made of a hydrogen siloxane compound having 5 hydrosilyl groups on average in a molecule (manufactured by Kaneka Corporation, trade name "CR500"), and tricresylphosphate (TCP) (70 parts by weight), which is a flame retardant, and the mixture was stirred. Thereafter, the mixture was defoamed under reduced pressure to remove air bubbles formed during stirring to give a uniform composition.

The above-mentioned adhesive composition was applied to a PTFE sheet with a thickness of 20 μm such that the thickness after heat treatment was 500 μm, the sheet was heat-treated at 130°C for 10 min, and a 20 μm-thick polypropylene film was laminated thereon to give a first adhesive sheet.

In addition, the above-mentioned adhesive composition was applied to a release-treated surface of a release sheet made of a poly(ethylene terephthalate) film such that the thickness after heat treatment was 500 μm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to the polypropylene film of the first adhesive sheet to complete a gasket having a total thickness of 1195 μm.

Example 2

The adhesive composition in Example 1 was applied on a 135 μm-thick PTFE sheet such that the thickness after a heat treatment was 1000 μm, a release-treated surface of a poly(ethylene terephthalate) film release sheet was adhered thereon. The laminate was heat-treated at 130°C for 10 min to complete a gasket having a total thickness of 1135 μm.

Example 3

To lauryl methacrylate (100 parts by weight) were added 2,2-dimethoxy-1,2-diphenylethan-1-one (photoinitiator, trade name "IRGACURE 651" manufactured by BASF) (0.05 part by weight) and 1-hydroxy-cyclohexyl-phenyl-ketone (photoinitiator, trade name "IRGACURE 184" manufactured by BASF) (0.05 part by weight), the mixture was supplied into a four-mouthed flask, and partially photopolymerized by exposure to UV under a nitrogen atmosphere to give a monomer syrup (partial polymer) having a polymerization rate of 7%. The monomer syrup contains a prepolymer having a molecular weight (Mw) of 6,000,000. The monomer syrup (100 parts by weight) was uniformly mixed with 1,6-hexanedioldiacrylate (trade name "NKester A-HD": manufactured by Shin-Nakamura Chemical Co., Ltd.) (0.08 part by weight) and tricresylphosphate (TCP) (70 parts by weight), which is a flame retardant, and defoamed to give a photopolymerizable composition (photocurable composition). After 24 hr from the preparation of the photopolymerizable composition, the photopolymerizable composition was applied to a substrate film (trade name "MKF-38" manufactured by Mitsubishi Chemical Polyester Film Corporation, thickness: 38 μm, polyester film) such that the thickness after light curing was 1.0 mm to form a polymerizable composition. A release sheet [polyester film (trade name "MRN-38" manufactured by Mitsubishi Chemical Polyester Film Corporation) with one surface release-treated with silicone release agent] was formed on the polymerizable composition layer to give a sheet. UV (UV) was irradiated at illuminance 5 mW/$cm^2$ from the both faces of the sheet for a time sufficient to reach a polymerization rate of 99% by using a black-light lamp (manufactured by Toshiba Lighting & Technology Corporation). The polymerizable composition layer was cured by light to form a viscoelastic body, whereby a viscoelastic body layer sheet was obtained.
The illuminance of UV was adjusted by an ultraviolet meter (trade name "UVRT-1" manufactured by TOPCON THCHNOHOUSE CORPORATION, peak sensitivity maximum wavelength 350 nm).
The PET substrate was peeled off from the aforementioned adhesive layer to expose the adhesive layer, which was adhered to a 135 μm-thick PTFE sheet, and the PET substrate on the opposite side was peeled off to complete a gasket having a total thickness of 1135 μm.

Comparative Example 1

In the same manner as in the adhesive composition used in Example 1 except that the amount of the curing agent comprising a hydrogen siloxane compound having 5 hydrosilyl groups on average in one molecule (manufactured by Kaneka Corporation, trade name "CR500") was changed to 5 parts by weight, an adhesive composition was prepared. In the same manner as in Example 1 except that the thickness of the polypropylene film was changed to 20 μm, and the thickness of the adhesive composition after heat treatment was changed to 400 μm, the first adhesive sheet was prepared. In the same manner as in Example 1 except that the thickness of the adhesive composition after heat treatment was changed to 400 μm, the second an adhesive sheet was prepared. The release sheet of the second adhesive sheet was detached to expose the adhesive layer, and the adhesive layer was adhered to the polypropylene film of the first adhesive sheet to complete a gasket having a total thickness of 955 μm.

Comparative Example 2

The adhesive composition used in Comparative Example 1 was applied to a PTFE sheet with a thickness of 135 μm such that the thickness after heat treatment was 800 μm, a release-treated surface of a poly(ethylene terephthalate) film release sheet was adhered thereon, and the laminate was heated at 130°C for 10 min to complete a gasket having a total thickness of 935 μm.

Comparative Example 3

A composition containing a urethane resin solution, multifunctional isocyanate, and hexacyclobromododecane (20 parts by weight per 100 parts by weight of the total amount of urethane resin solution and multifunctional isocyanate component) was applied on a release-treated surface of a release sheet made from a poly(ethylene terephthalate) film, and heat-treated at 100°C for 2 min to form an adhesive sheet having a 1000 μm-thick adhesive layer. Then, a mesh sheet (10 mesh) made from polyvinyl chloride was applied on a mesh sheet of the above-mentioned composition, and heat-treated at 100°C for 2 min to form a 135 μm-thick adhesive layer, whereby a gasket having total thickness of 1135 μm was completed.
Respective adhesive sheets prepared in the above-mentioned Examples 1 - 3 and Comparative Examples 1 - 3 were subjected to the aforementioned test. The results are shown in Table 1. The numerical values indicated in the column of material are in "parts by weight". As for the thickness of the adhesive layer, it means the thickness of one layer when the adhesive layer has only one layer, and the total thickness of two layers when the adhesive layer has two layers.

Table 1

| | | | Comparative Example 1 | Comparative Example 2 | Comparative Example 3 | Example 1 | Example 2 | Example 3 |
|---|---|---|---|---|---|---|---|---|
| | kind of adhesive | | polyoxy-alkylene | polyoxy-alkylene | poly-urethane | polyoxy-alkylene | polyoxy-alkylene | acrylic |
| material | polymer | | 100 | 100 | 100 | 100 | 100 | 100 |
| | curing agent | | 5 | 5 | 20 | 7.65 | 7.65 | 0.08 |
| | flame retardancy | | 70 | 70 | - | 70 | 70 | 70 |
| | core | kind | PP | - | vinyl chloride mesh | PP | - | - |
| | substrate | kind | PTFE | PTFE | PTFE | PTFE | PTFE | PTFE |
| evaluation | thickness (μm) | adhesive layer | 800 | 800 | 1000 | 1000 | 1000 | 1000 |
| | | core film | 20 | - | - | 20 | - | - |
| | | substrate sheet | 135 | 135 | 135 | 135 | 135 | 135 |
| | | total thickness | 955 | 935 | 1135 | 1195 | 1135 | 1135 |
| | distortion recovery ratio (%) | | 28 | 32 | 20 | 60 | 60 | 52 |
| | water stop performance after recovery | | 65 | 67 | 92.5 | 9.5 | 3.5 | 15 |
| | flame retardancy test | | O | O | O | O | O | O |
| | halogen content | | O | O | × | O | O | O |

## Claims

1. A gasket comprising an adhesive sheet having an adhesive layer, and a substrate sheet laminated on one surface of the adhesive sheet, which shows a distortion recovery rate according to the following compression distortion recovery test (I) of not less than 40%:

   Compression distortion recovery test (I): A 10 mm flat square sample is heated to 80°C, under which conditions a load is applied to compress the sample in the thickness direction such that the thickness thereof becomes 75% of the total thickness of the sample before loading, the load is lifted, the total thickness of the sample is measured 3 hr after unloading, and a distortion recovery rate is calculated according to the following formula:

   distortion recovery rate (%)=(total sample thickness 3 hr after unloading - (total sample thickness before compression x 0.75))/(total sample thickness before compression x 0.25) x 100.

2. The gasket according to claim 1, wherein the adhesive sheet is a non-halogen flame retardant-containing adhesive sheet provided with an adhesive layer containing a non-halogen flame retardant.

3. The gasket according to claim 1, wherein the adhesive sheet is a laminate of adhesive layer/core film/adhesive layer in this order.

4. The gasket according to claim 1, wherein the adhesive sheet consists of a single layer of an adhesive layer.

5. The gasket according to claim 1, wherein the adhesive layer is a polyoxyalkylene adhesive layer or an acrylic adhesive layer.

6. The gasket according to claim 1, wherein the adhesive layer is a polyoxyalkylene adhesive layer which is a cured product layer of a composition comprising the following components A-C:

   A: a polyoxyalkylene polymer having at least one alkenyl group in one molecule
   B: a compound containing two or more hydrosilyl groups on average in one molecule
   C: a hydrosilylation catalyst.

7. The gasket according to claim 2, wherein the adhesive layer is a polyoxyalkylene adhesive layer which is a cured product layer of a composition containing the following components A - D:

   A: a polyoxyalkylene polymer having at least one alkenyl group in one molecule
   B: a compound containing two or more hydrosilyl groups on average in one molecule
   C: a hydrosilylation catalyst
   D: a non-halogen flame retardant.

8. The gasket according to claim 1, wherein the substrate sheet is a fluorine resin sheet.

9. The gasket according to claim 2, wherein the substrate sheet is a fluorine resin sheet.

10. A method of tightly sealing two opposing faces, comprising placing the gasket according to claim 1 between the two opposing faces.

11. A method of tightly sealing two opposing faces, comprising placing the gasket according to claim 2 between the two opposing faces.

FIG. 1

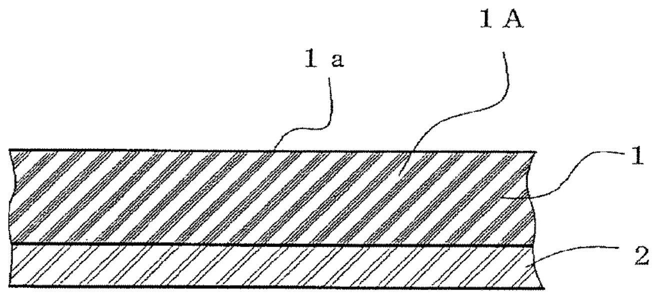


FIG. 2

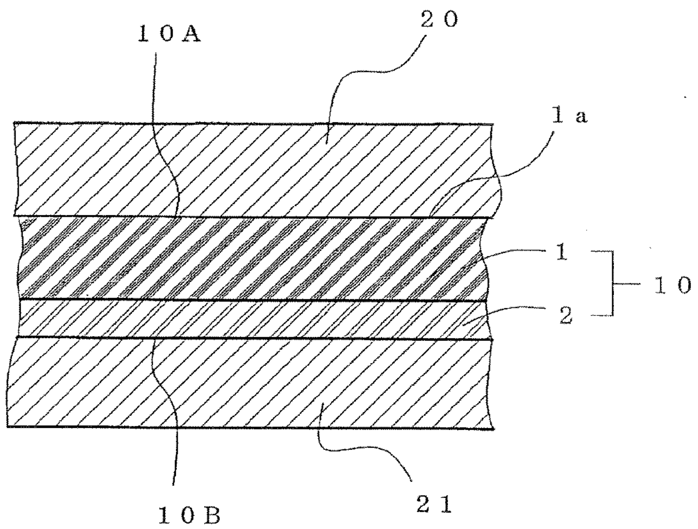


FIG. 3

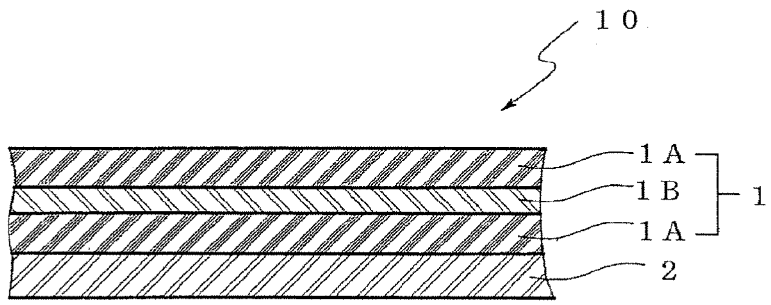

F I G. 4

(A)

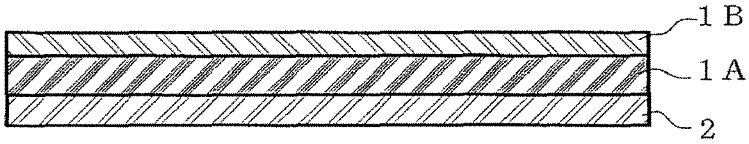


(B)

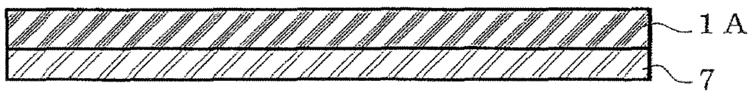


(C)

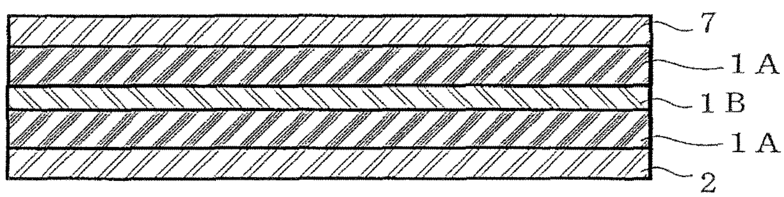

FIG. 5

(A)

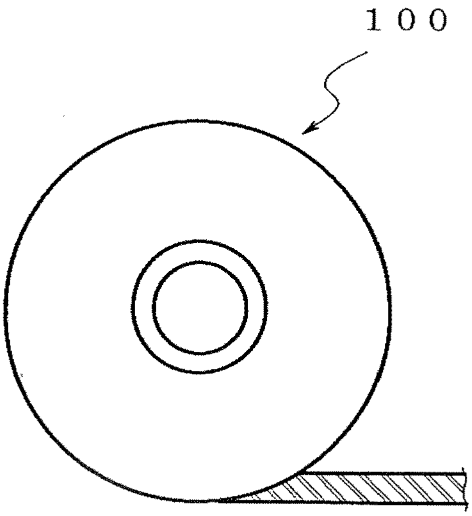


(B)

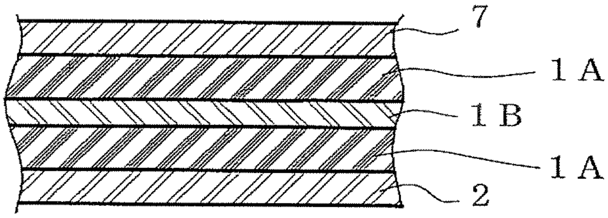

F I G. 6

(A)

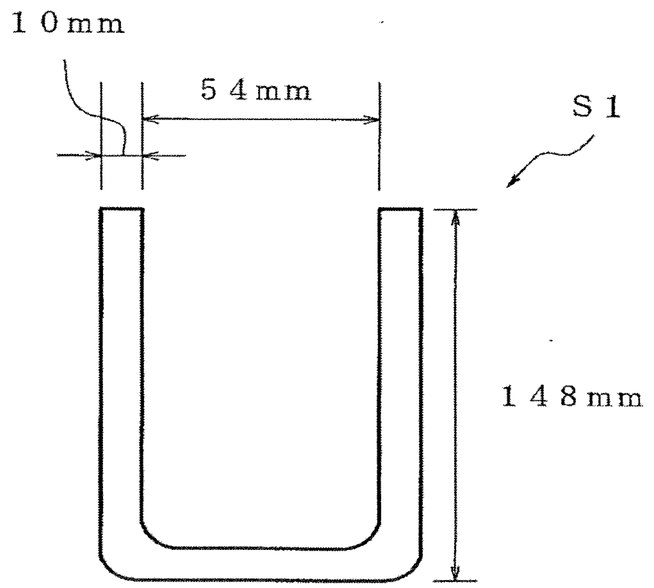


(B)

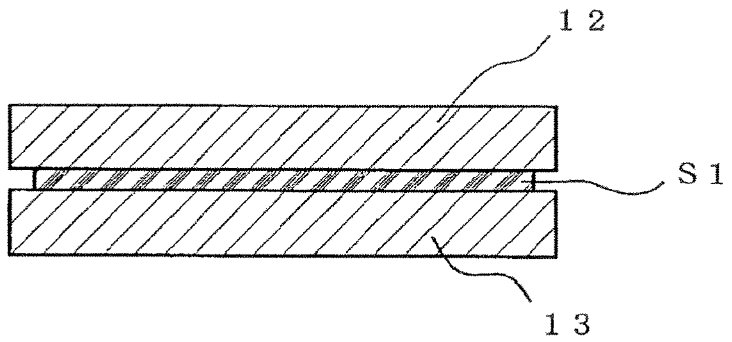


(C)

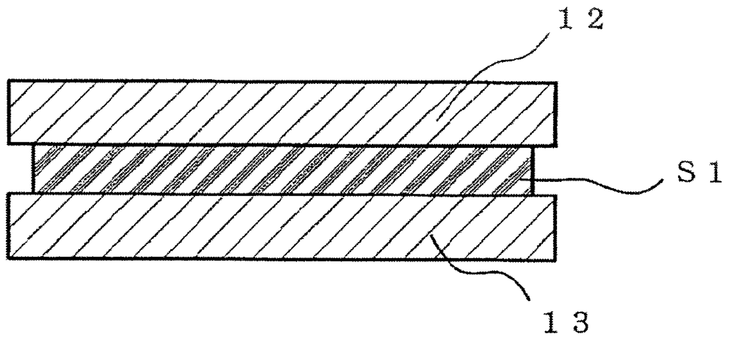

F I G. 7

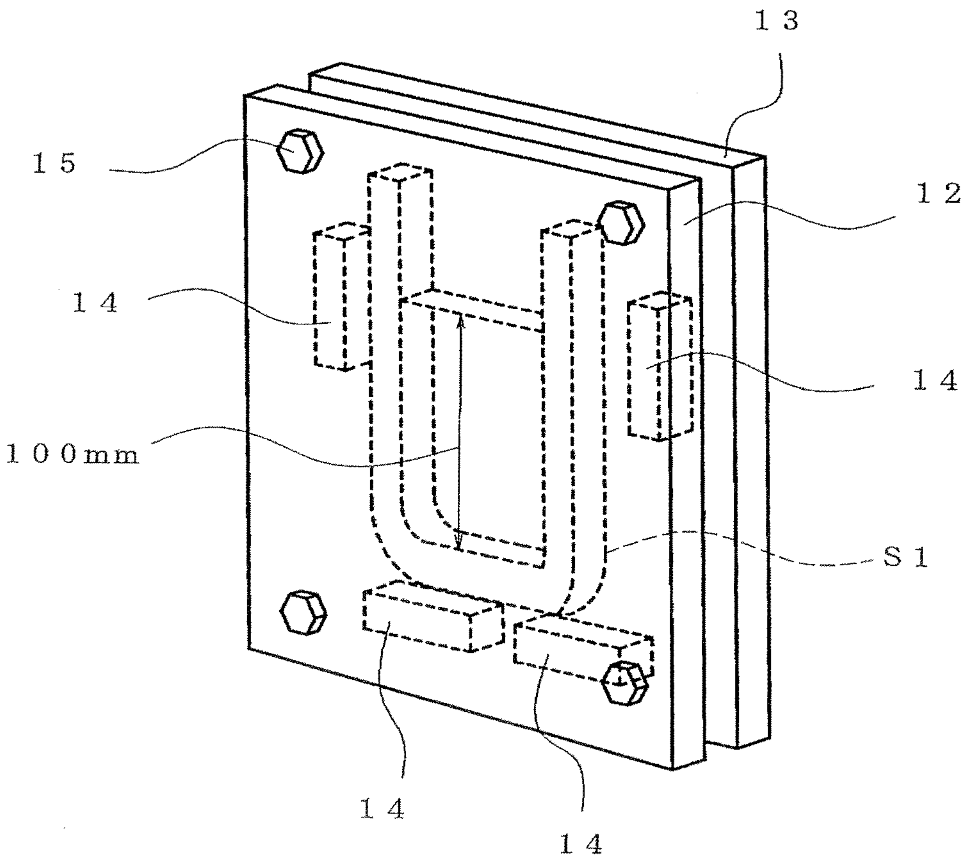

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040070156 A1
- JP 2003292926 A
- US 3159601 A
- US 3159662 A, Ashby
- US 3220972 A, Lamoreaux